# EUROPÄISCHE PATENTSCHRIFT

(11) **EP 0 595 063 B1**
(45) Veröffentlichungstag und Bekanntmachung des Hinweises auf die Patenterteilung: **11.08.1999**
(21) Anmeldenummer: 93115995.8
(22) Anmeldetag: 04.10.1993
(51) Int. Cl.: D06N 7/00, C09J 123/02

(54) **Kaschierkleber und Teppichboden mit dem Kaschierkleber als Rückenbeschichtung**
Lamination adhesive and carpet comprising the lamination adhesive as back coating
Couche adhésive et tapis comprenant, sur son envers, une telle couche adhésive

(30) Priorität: 30.10.1992 DE 4236635; 12.11.1992 DE 4238196
(43) Veröffentlichungstag der Anmeldung: 04.05.1994
(73) Patentinhaber: Vorwerk & Co. Interholding GmbH, 42275 Wuppertal (DE)
(72) Erfinder: Beyer, Friedrich, D-31787 Hameln (DE); Werner, Achim, D-31787 Hameln (DE); Hölzel, Klaus, D-31787 Hameln (DE)
(74) Vertreter: Müller, Enno, Dipl.-Ing.

(56) Entgegenhaltungen:
- EP-A- 0 005 050
- US-A- 4 844 765
- DATABASE WPI Week 8548, Derwent Publications Ltd., London, GB; AN 85-299683 (48) & JP-A-60 206 868 (HIGH SEAT KOGYO KK) 18. Oktober 1985
- CHEMIEFASERN/TEXTILINDUSTRIE Bd. 43, Nr. 3 , März 1993 , FRANKFURT/MAIN, DE Seiten 100 - 101 B. TEN HOEVEL 'AKTUELLE TEPPICHTRENDS'
- DATABASE WPI Week 8530, Derwent Publications Ltd., London, GB; AN 85-181298 (30) & JP-A-60 109 806 (SEKISUI CHEM IND KK) 15. Juni 1985
- DATABASE WPI Week 8409, Derwent Publications Ltd., London, GB; AN 84-051572 (09) & JP-A-59 009 021 (HAYASHI TELEMP KK) 18. Januar 1984

## Beschreibung

Die Erfindung betrifft einen Kleber, insbesondere Kaschierkleber auf Basis eines Kunst-Harzes, bei dem unverschmolzene faserartige Bestandteile insbesondere aus Polyamid 6 oder 6.6, durch aufgeschmolzene thermoplastische Anteile aus Polyolefinen miteinander verbunden sind.

Derartige Kleber, insbesondere Kaschierkleber auf Basis eines Kunst-Harzes sind bekannt. So geht bspw. aus der JP-A-60206868 als bekannt hervor, synthetische Fasern von vergleichsweise hohem Schmelzpunkt in thermoplastischem Material mit niedrigerem Schmelzpunkt zur Verstärkung eines extrudierten Endproduktes vollständig einzubinden.

Es ist ein Ziel der Erfindung, einen Kleber der in Rede stehenden Art mit einer hohen Klebekraft bei gleichzeitiger hohen Elastizität anzugeben.

Dieses Ziel ist beim Gegenstand des Anspruches 1 erreicht, wobei darauf abgestellt ist, daß durch aufgeschmolzene thermoplastische Anteile aus Polyolefinen verbundene ungeschmolzene Fasergruppen, insbesondere Polyamid-Fasergruppen, durch einzelne, lange Fasern, insbesondere Polyamid-Fasern, mit weiteren verbundenen, ungeschmolzenen Fasergruppen aus insbesondere Polyamid zu trockenen, rieselfähigen Körnchen eines Kleber-Granulats verbunden sind. In diesem Zusammenhang ist auch darauf abgestellt, daß der Kleber unverschmolzene faserige Bestandteile aus Polyamid o. a. zum Beispiel Polyester aufweist, die durch thermoplastische Anteile auf Basis von Polyolefinen, wie bspw. Polypropylen und/oder Polyethylen miteinander verhaftet sind. Die zuletzt genannten thermoplastischen Anteile erbringen die erwünschte Klebewirkung. Dazu ist eine Wärmeeinwirkung erforderlich, welche die polyolefinen Bestandteile, nicht jedoch die faserigen Anteile auf Basis von insbesondere Polyamid aufschmilzt. Bspw. besitzt Polyamid einen Schmelzpunkt von ca. 220° C, die eingesetzten Polyolefine erweichen dagegen bereits bei ca. 120° bis 130° C. Weiter kann der Kleber leitfähige Substanzen enthalten, bspw. leitfähige Fasern oder entsprechende Zusätze chemischer Produkte. Auch ist bevorzugt, daß der Kleber Anteile von Styrol-Acrylat und/oder Styrol-Butadien, Polyvinylacetat u. ä. enthält.

Gegenstand der Erfindung ist auch ein Teppichboden, mit eine Florschicht ausbildenden Polfäden, einer Trägerschicht, die aus Faser- oder Bändchenmaterial aus Polyolefinen oder Polyester besteht, und einer Rückenbeschichtung, wobei die Polfäden gegebenenfalls über die Rückenbeschichtung mit der Trägerschicht fest verbunden sind und aus einem vergleichsweise hochtemperaturbeständigen Kunststoff, insbesondere Polyamid 6 oder 6.6 bestehen, und die Rückenbeschichtung als Kaschierung mit der Trägerschicht verbunden ist. Die Herstellung und die Konstruktion solcher Teppichböden sind bekannt. Es ist weiter ein Ziel der Erfindung, einen Teppichboden dieser Art so weiterzubilden, daß eine hochfeste Verbindung der Schichten untereinander erreicht wird, und daß auch eine Wiederverwertbarkeit des Teppichbodens hierdurch nach entsprechender Aufbereitung nicht eingeschränkt wird. Dieses Ziel ist dadurch erreicht, daß die Rückenbeschichtung mittels eines wärmeaktivierbaren Klebers der zuvor beschriebenen Art durchgeführt ist. Weiter wird vorgeschlagen, daß die Rückenbeschichtung mittels eines unverschmolzene Polyamidfasern enthaltenden Kaschierklebers gebildet ist. Bevorzugt können auch die weiteren Schichten des Teppichbodens aus Kunststoff, bspw. aus Polypropylen und/oder Polyethylen bestehen. Über die Rückenbeschichtung des Trägermaterials hinaus kann der Teppichboden weitere insbesondere eine Rückenschicht, die auch als Zweitrücken bezeichnet wird, aufweisen. Erfindungsgemäß ist insbesondere die Kaschierung zwischen der Rückenschicht und der Trägerschicht (auch als Obermaterial bezeichnet) besonders haltbar ausgebildet, nämlich unmittelbar durch den Kaschierkleber, der auch die Rückenbeschichtung bildet. Da die Rückenschicht und die Trägerschicht aus Kunststoff, nämlich aus Polyolefinen, insbesondere Fasermaterialien aus Polyolefinen, nämlich bevorzugt Polypropylen oder Polyethylen, gebildet sind, ist nicht nur eine Verbesserung des Teppichs an sich gegeben, sondern auch eine Wiederverwertbarkeit ermöglicht. Die Polyamidfasern oder sonstige Faserbestandteile des Kaschierklebers stehen einer Wiederverwertbarkeit des Teppichs nicht entgegen, sondern begünstigen diese sogar. Die Faseranteile des Kaschierklebers sind insbesondere so gewählt, daß sie im Verhältnis mit den Polfäden des Teppichbodens übereinstimmen. Wenn bspw. in dem Teppichboden (bezogen auf die Masse) 30 % Faseranteile enthalten sind, ist es bevorzugt, daß auch der Kaschierkleber, aus dem die Rückenbeschichtung gebildet wird, 30 % Faseranteile (aus gleichen Fasern) aufweist. Es ist weiter bevorzugt, daß der Kaschierkleber thermoplastische Anteile auf Basis von Polyolefinen enthält. Darüber hinaus auch Anteile an Styrol-Acrylat und/oder Styrol-Butadien, Polyvinylacetat u. a. Desweiteren antistatische Zusätze in Form von Kohlenstoff oder leitfähige metallbedampfte Fasern sowie chemische Zusätze, z. B. Kaliumformiat (welches bspw. leitfähig ist) u. a. Dadurch, daß eine besonders feste Verbindung zwischen der Trägerschicht und der Rückenschicht erreicht ist, kann auch ein verklebter Teppichboden wieder herausgerissen werden, ohne daß Bestandteile am Boden haften bleiben. Auch der Kaschierkleber enthält nur (im wesentlichen gleichartige) Kunststoffanteile, so daß auch hierdurch, trotz verbesserter Haftungsbedingungen, eine Wiederverwertbarkeit des Teppichbodens im Sinne eines Recycelns nicht eingeschränkt ist. Bezüglich der in dem Kaschierkleber enthaltenen thermoplastischen Polyolefinanteile ist weiter bevorzugt, daß der Kaschierkleber thermoplastische Anteile auf Basis Polyethylen enthält. Weiter kann der Kaschierkleber auch thermoplastische Anteile auf Basis Polypropylen enthalten. Alles Rohstoffe, die auch in dem Teppichboden selbst enthalten sind. Darüber hinaus kann der Kaschierkleber Anteile von Styrol-Acrylat und/oder Styrol-Butadien und/oder Polyvinylacetat enthalten. Auch ist es bevorzugt, wenn der Kaschierkleber leitfähige Bestandteile enthält, bspw. Kohlenstoffasern oder metallbedampfte leitfähige Fasern (letztere wiederum bevorzugt auf Basis Polyamid). Hierdurch kann der Kaschierkleber leitfähig eingestellt sein, was bei Teppichböden für Sonderanwendungen, bspw. Computerräume, wesentlich ist. Dadurch, daß der verwendete Kaschierkleber faserige Bestandteile auf Basis Polyamid o. a. enthält, ergibt sich im ausgehärteten Zustand der durch den Kaschierkleber gebildeten Schicht auch ein auffallend mattes Aussehen dieser Schicht, was bspw. dann von Bedeutung ist, wenn die Rückenschicht aus einem vergleichsweise grob eingestellten Gewebe besteht, durch welches der Kaschierkleber hindurchscheint. Weiterhin ergibt sich ein vorteilhafter textilartiger Charakter einer so gebildeten Schicht. Bspw. ist dies von Bedeutung, wenn nur die Kaschierkleberschicht auf das vorgefertigte Obermaterial aufgebracht ist, der Zweitrücken aber nicht eingesetzt wird.

Ein so gebildeter Teppich besteht insgesamt bevorzugt aus einem Polmaterial aus Polyamid 6 und/oder Polyamid 6.6 oder dergl. Dieses Polmaterial ist in einem die Trägerschicht bildenden Trägermaterial aus Polypropylen, entweder einem Polypropylenvlies oder Polypropylenbändchen, eingenadelt. Die Verankerung des Polmaterials in dem Obermaterial ist weiter bevorzugt mittels eines Vorstriches auf Basis von Copolymeren von z. B. Styrol-Acrylat, Styrol-Butadien, Polyvinylacetat u. a. vorgenommen. Desweiteren ist ein Kaschierkleber zwischen dem Obermaterial und dem sogenannten Zweitrükken vorhanden. Dieser Kaschierkleber besitzt bspw. Polymidanteile (im wesentlichen in Form von ungeschmolzenen Polyamidfasern) von ca. 15 bis 35 %. Darüber hinaus einen Anteil an Polyolefinen von ca. 60 bis 80 %. Weitere Anteile, die etwa zur leitfähigen Einstellung der Kaschierschicht erwünscht sind oder dem Bestandteil Styrol-Acrylat o. dgl. zuzuordnen sind, sind zu etwa 3 bis 6 % vorhanden. Bevorzugte Zusammensetzungen des Kaschierklebers sind bspw. 15 bis 35 % Polyamid, 3 bis 6 % Styrol-Acrylat und 60 bis 80 % Polyolefine (Polypropylen, Polyethylen o. dgl.). Der Zweitrücken kann ein Gewirke, Gewebe, Vlies o. dgl. sein.

Darüber hinaus ist Gegenstand der Erfindung ein Verfahren zur Herstellung eines pulver- oder granulatförmigen Klebers der zuvor beschriebenen Art, bei welchem Faserware, beispielsweise Teile eines zerkleinerten Teppichs unter gegebenenfalls gesteuerter Wärmeentwicklung agglomeriert werden, bei der unverschmolzene faserartige Bestandteile, insbesondere aus Polyamid durch geschmolzene thermoplastische Anteile aus Polyolefinen miteinander verbunden werden, wobei die thermoplastischen Anteile aus Polyolefinen derart aufgeschmolzen werden, daß die nicht aufgeschmolzenen Fasern, insbesondere Polyamid-Fasern, durch die thermoplastischen Anteile aus polyolefinen zu Fasergruppen aus insbesondere Polyamid und die Fasergruppen durch einzelne, lange Fasern, insbesondere Polyamid-Fasern, mit weiteren unverschmolzenen Fasergruppen zu trockenen, rieselfähigen Körnchen eines Kleber-Granulats verbunden werden. Ein derart hergestellter Kleber dient vorzugsweise als Kaschierkleber, weiter vorzugsweise zur Anwendung bei einer (weiteren) Teppichherstellung. Weiter ist darauf abgestellt, daß Fasern, auf Basis Polyamid o. dgl., bspw. das Polmaterial eines Teppichs, zusammen mit thermoplastischen Kunststoffen aus bspw. Polyolefinen, insbesondere Polypropylen, Polyethylen usw., einer Wärmebeaufschlagung unterzogen wird derart, daß die faserigen Bestandteile, ohne selbst aufgeschmolzen zu werden, durch geschmolzenes thermoplastisches Material miteinander verbunden werden. In Ausgestaltung ist vorgesehen, daß die erhaltenen Agglomerate zermahlen werden auf Granulat- bzw. Pulverform. Bevorzugt kann ein solches Verfahren dadurch ausgeführt werden, daß vollständige Bestandteile eines Teppichs, der im wesentlichen aus polmaterial auf Basis Polyamid, insbesondere Polyamid 6 und/oder Polyamid 6.6 o. dgl. besteht, desweiteren aus Bestandteilen auf Basis von Polyolefinen, nämlich Polypropylen und/oder Polyethylen usw., in kleine Teile zerrissen wird und sodann in einem sogenannten Plastcompactor agglomeriert wird. Ein Plastcompactor zermahlt diese Bestandteile, wobei eine gewisse Wärmeentwicklung auftritt, die zum Schmelzen der niedrigen thermoplastischen Anteile führt, nicht jedoch zum Schmelzen der Polyamidanteile o. dgl. Aus dem Plastcompactor wird eine granulatartige Masse erhalten, die in eine Feinmühle gegeben wird. In der Feinmühle werden keine Temperaturen erreicht, welche die faserigen Polyamidteile zum Schmelzen bringen. Ein so erhaltenes Pulver kann mit bspw. reinem Polyethylen, bspw. zu einem Anteil von 30 %, vermischt werden.

Nachstehend ist die Erfindung des weiteren anhand der beigefügten Zeichnung, die jedoch lediglich Ausführungsbeispiele darstellt, erläutert. Hierbei zeigt:
- Fig. 1: einen schematisch und teilweise aufgetrennt dargestellten Teppichboden;
- Fig. 2: eine schematische Darstellung eines Kaschierklebers in Granulat- bzw. Pulverform;
- Fig. 3: eine Einzeldarstellung eines Granulat-Pulverkornes gem. Fig. 2;
- Fig. 4: eine vergrößerte, schematische Darstellung eines Pulverkornes, das einem Granulatkorn gem. Fig. 3 zugrunde liegt;
- Fig. 5: eine weitere vergrößerte schematische Darstellung eines Bestandteiles eines Pulverkornes gem. Fig. 4;
- Fig. 6: eine Vorrichtung zur Zerkleinerung von Teppichmaterial;
- Fig. 7: eine Vorrichtung zur weiteren Zerkleinerung auf Pulvergröße von Granulatkörpern, die in einer Vorrichtung gem. Fig. 6 gewonnen wurden.

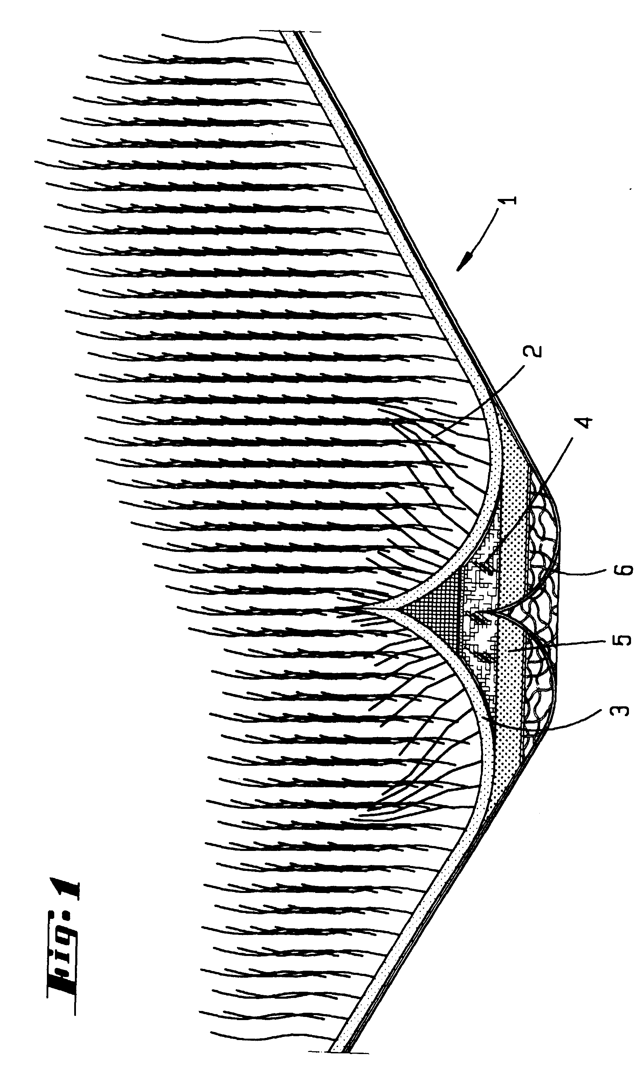

Dargestellt und beschrieben ist zunächst mit Bezug zu Fig. 1, ein Teppichboden 1, der, in Fig. 1 schematisch dargestellt, Polfäden 2, welche eine Florschicht bilden, aus Polyamid 6 oder Polyamid 6.6 u.a. besitzt. Diese Polfäden sind in ein Trägermaterial 3 genadelt. Das Trägermaterial kann ein Vlies oder Bändchengewebe aus Polypropylen sein. Eine erste Verfestigung der Polfäden 2 mit dem Primär-Trägermaterial 3 ist durch einen sogenannten Vorstrich 4 erreicht, der hier als Schicht übertrieben dick dargestellt ist. In der Realität ist die Vorstrichbeschichtung sehr dünn. Der Vorstrich besteht aus Copolymeren von zum Beispiel Styrol-Acrylat, Styrol-Butadien, Polyvinylacetat u.a. Das Trägermaterial 3 mit den darin - etwa aufgrund des Vorstriches 4 - vernadelten und verfestigten Polfäden 2 ist mittels einer Kaschierung 5, die hier auch aus Demonstrationsgründen als übertrieben dicke Schicht dargestellt ist, mit einem sogenannten textilen Zweitrücken 6 verbunden. Die Kaschierung 5 ist weiter oben auch als Rückenbeschichtung bezeichnet worden. Diese Bezeichnung stellt darauf ab, daß der Zweitrücken 6 nicht vorhanden zu sein braucht und die Kaschierung 5 in einem solchen Fall den Rücken des Teppichbodens 1 bildet. Der textile Zweitrücken 6 ist beim Ausführungsbeispiel ein Gewebe auf Basis Polypropylen.

Der Kaschierkleber besteht aus einem Pulver, dessen klebewirksame Bestandteile thermoplastische Kunststoffanteile, insbesondere Polyolefine, nämlich Polypropylen, Polyethylen usw., sind. Weiter weist dieses Pulver einen hohen Anteil von unverschmolzenen Polyamidfasern auf. Dieser Anteil kann beispielsweise 15 bis 35 % der Masse des Pulvers ausmachen.

Im Zuge einer Kaschierung der Oberware 3 mit der Rückenschicht 6 wird das den Kleber ausmachende Pulver erwärmt bzw. eine solche Wärmeeinwirkung vorgenommen, daß die genannten thermoplastischen Anteile, nicht jedoch die Faseranteile auf Basis Polyamid, aufschmelzen und nach dem Abkühlen die Verbindung zwischen der Oberware 3 und der Rückenschicht 6 ergeben. Der Kaschierkleber enthält auch Anteile von Styrol-Acrylat. Insbesondere kann der Kaschierkleber sich derart zusammensetzen, daß 15 bis 35 % Polyamidfaseranteile vorliegen, 3 bis 6 % Styrol-Acrylatanteile, 60 bis 80 % Polyolefine, hierunter wiederum 20 bis 30 % Polypropylenanteile und 20 bis 30 % Polyethylenanteile.

Darüber hinaus können in dem Kaschierkleber leitfähige Substanzen enthalten sein. Dieses ist insbesondere von Bedeutung für Teppichboden für Computerräume. Durch die leitfähige Einstellung der Kaschierkleberschicht können elektrostatische Aufladungen durch sofortigen Ausgleich der elektrischen Ladungen vermieden werden.

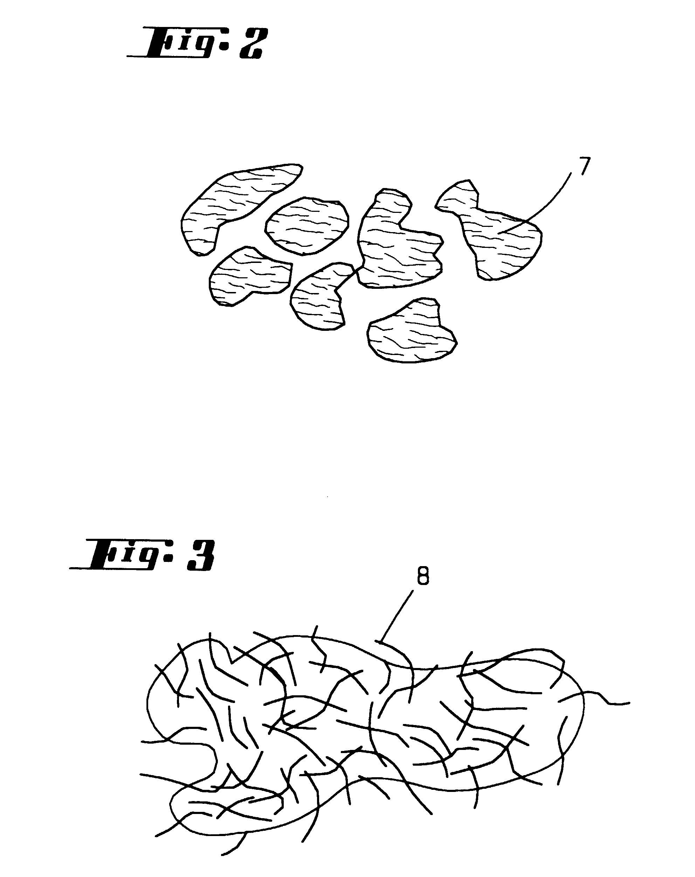

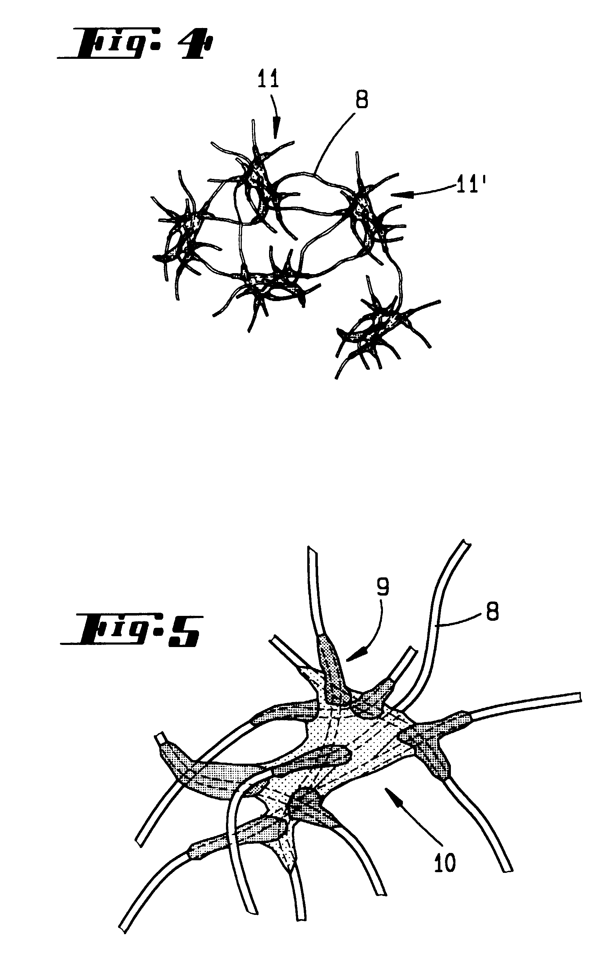

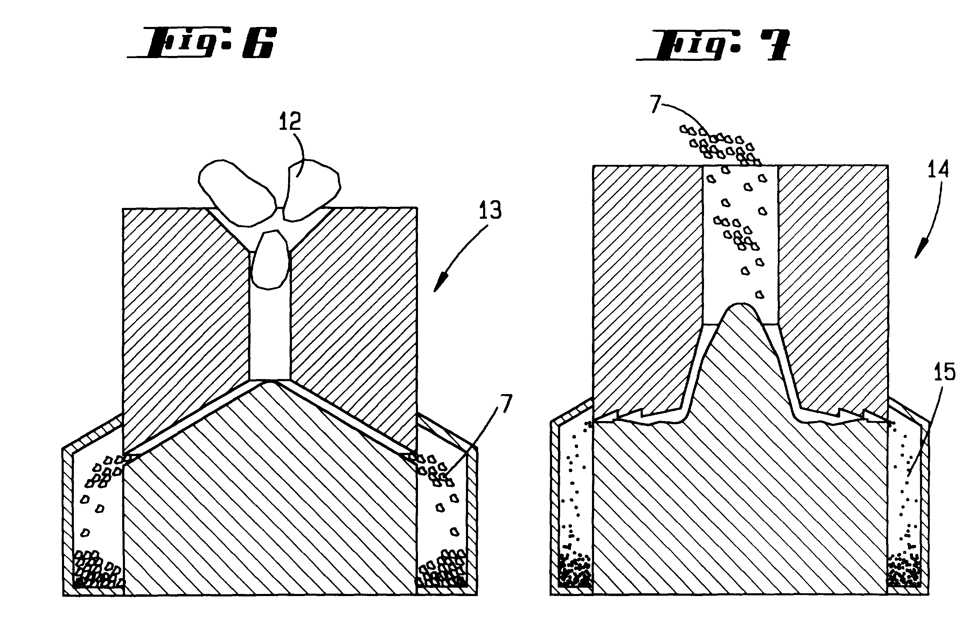

Der Kleber, der in Pulver- oder Granulatform vorliegt, ist im einzelnen in den Fig. 2 bis 5 dargestellt. Er besteht makroskopisch aus einzelnen, trocken vorliegenden und insgesamt eine rieselfähige Substanz ergebenden Körnchen 7. Ein solches Körnchen 7 ist in Vergrößerung, jedoch schematisch in Fig. 3 dargestellt. Es ist ersichtlich, daß eine Vielzahl von Polyamidfasern 8 das insgesamt "faserige" Erscheinungsbild eines Körnchens 7 ausmachen. Die Polyamidfasern 8 sind untereinander verbunden, wie dies im einzelnen in Fig. 4 und 5 dargestellt ist, durch niedrig schmelzende Kunststoffanteile, die teilweise hüllenartig, wie bei dem Bezugszeichen 9 beispielsweise dargestellt, die Polyamidfasern 8 verkleben. Diese Hülle aus niedrig schmelzenden thermoplastischen Kunststoffanteilen erstreckt sich aber in der Regel nur über eine Teillänge einer Polyamidfaser 8. Es sind auch größere Anhäufungen, wie durch das Bezugszeichen 10 erläutert, der thermoplastischen Anteile gegeben. Es ergeben sich Fasergruppen 11 (vergleiche beispielsweise Fig. 4), die aufgrund längerer Polyamidfasern 8, die mit anderen Fasergruppen 11' verbunden sind, durch Wirrlage sich zu zu einem Körnchen 7 verbinden.

Das Klebergranulat bzw. Kleberpulver weist eine Zusammensetzung auf, wie sie vorstehend schon beschrieben ist.

Während die Granulatkörnchen 7 Größen von beispielsweise 2 mm bis ca. 5 oder 7 mm aufweisen, weisen die Pulverkörnchen Größen von <1000 µm auf. Beide Formen, die Granulatkörnchen wie auch die Pulverkörnchen sind rieselfähig. Während bei den Granulatkörnchen 7 größere Agglomerate von miteinander verbundenen Fasern/thermoplastischer Verschmelzungsanteile vorhanden sind, bestehen die Pulverkörnchen im wesentlichen aus einzelnen Fasergruppen, wie sie in Fig. 5 dargestellt sind.

Ein solcher Kaschierkleber wird bevorzugt durch Zermahlen bei gleichzeitiger Wärmeeinwirkung und Temperatursteuerung eines Teppichbodens erhalten, wie er vorstehend auch beschrieben worden ist.

Der Teppichboden 1 wird hier zunächst, zerkleinert in Teppichbodenteile 12 (vgl. Fig. 6), in einen sogenannten Plastcompactor 13 gegeben. Dieser agglomeriert die Teppichbodenteile 12, wobei durch die - gegebenenfalls gesteuerte - Wärmeentwicklung die thermoplastischen Anteile aus Polyolefinen aufgeschmolzen werden, nicht jedoch die Polfasern 2 aus Polyamid. Als Ergebnis erhalt man Granulatkörnchen 7, wie sie auch im einzelnen in Fig. 2 bzw. Fig. 3 dargestellt sind. Die Steuerung der Wärmeeinwirkung kann beispielsweise durch eine unterschiedliche Druckeinstellung im Mahlspalt des Plastcompactors erreicht werden.

Diese Granulatkörnchen 7 werden - mit Bezug zu Fig. 6 - in ein weiteres Mahlgerät, nämlich eine Feinmühle 14 gegeben. Als Ergebnis erhält man Pulverkörnchen 15, wie sie im einzelnen - in Vergrößerung in Fig. 5 - dargestellt sind.

Das so erhaltene Pulver wird bevorzugt noch mit - reinem - Polyethylen in Granulat- bzw. Pulverform vermischt, nämlich etwa mit einem Anteil von 10 bis 50 %.

## Patentansprüche

1. Kleber, insbesondere Kaschierkleber auf Basis eines Kunst-Harzes, bei dem unverschmolzene faserartige Bestandteile, insbesondere aus Polyamid 6 oder 6.6, durch aufgeschmolzene thermoplastische Anteile aus Polyolefinen miteinander verbunden sind, dadurch gekennzeichnet, daß durch aufgeschmolzene thermoplastische Anteile aus Polyolefinen verbundene ungeschmolzene Fasergruppen (11), insbesondere Polyamid-Fasergruppen, durch einzelne, lange Fasern (8), insbesondere Polyamid-Fasern, mit weiteren verbundenen, ungeschmolzenen Fasergruppen (11'), aus insbesondere Polyamid, zu trockenen, rieselfähigen Körnchen eines Kleber-Granulats verbunden sind.

2. Kleber nach Anspruch 1, dadurch gekennzeichnet, daß der Kleber einen ungeschmolzenen Faseranteil von 15 % bis 35 % aufweist.

3. Kleber nach einem oder mehreren der vorhergehenden Ansprüche, dadurch gekennzeichnet, daß das Granulat eine Korngröße zwischen zwei Millimeter und sieben Millimeter aufweist.

4. Kleber nach einem oder mehreren der vorhergehenden Ansprüche, dadurch gekennzeichnet, daß der Kleber in Pulverform gemahlenen Granulats, im wesentlichen vereinzelte Fasergruppen (11), insbesondere Polyamid-Fasergruppen, aufweisend, eine Pulverkorngröße von weniger als ein Millimeter aufweist.

5. Kleber nach einem oder mehreren der vorhergehenden Ansprüche, dadurch gekennzeichnet, daß der Kleber leitfähige Substanzen enthält, beispielsweise leitfähige Polfasern sowie weitere leitfähige Substanzen, z.B. Kaliumformiat.

6. Kleber nach einem oder mehreren der vorhergehenden Ansprüche, dadurch gekennzeichnet, daß der Kleber als Granulat bzw. Pulver vorliegend mit einem zugesetzten Anteil, vorzugsweise ein Polyethylenanteil, von reinem thermoplastischen Kunststoff-Granulat und/oder -pulver einer Menge von 10 % bis 50 %, vorzugsweise 30 %, der Ausgangsmenge vermischt ist.

7. Kleber nach einem oder mehreren der vorhergehenden Ansprüche, dadurch gekennzeichnet, daß aufgeschmolzene thermoplastische Anteile aus Polyolefinen ungeschmolzene Fasern (8), insbesondere Polyamid-Fasern, höheren Schmelzpunktes teilweise hüllenartig umgeben und in Anhäufungen Fasern (8) zu Fasergruppen (11) verbinden, wobei die Hülle aus thermoplastischen Kunststoffanteilen sich nur über eine Teillänge einer Faser (8) erstreckt.

8. Teppichboden (1), mit eine Florschicht ausbildenden Polfäden (2), einer Trägerschicht, die aus Faser- oder Bändchenmaterial aus Polyolefinen oder Polyester besteht, und einer Rückenbeschichtung (6), wobei die Polfäden (2) gegebenenfalls über die Rückenbeschichtung (6) mit der Trägerschicht fest verbunden sind und aus einem vergleichsweise hochtemperaturbeständigen Kunststoff, insbesondere Polyamid 6 oder 6.6, bestehen, und die Rückenbeschichtung (6) als Kaschierung (5) mit der Trägerschicht verbunden ist, dadurch gekennzeichnet, daß die Rückenbeschichtung (6) mittels eines wärmeaktivierbaren Klebers nach einem oder mehreren der vorhergehenden Ansprüche durchgeführt ist.

9. Teppichboden nach Anspruch 8, dadurch gekennzeichnet, daß der Faseranteil des verwendeten Kaschierklebers und des übrigen Teppichbodens gleich ist und bevorzugt etwa 30 % beträgt.

10. Teppichboden nach einem oder mehreren der Ansprüche 8 bis 9, dadurch gekennzeichnet, daß der Teppichboden und der Kaschierkleber gleichartige Kunststoffanteile in Form thermoplastischer Anteile aus Polyolefinen und temperaturbeständigen Kunststoffasern (8), insbesondere aus Polyamid, aufweisen.

11. Teppichboden nach einem oder mehreren der Ansprüche 8 bis 10, dadurch gekennzeichnet, daß der Kaschierkleber einen textilen Zweitrücken (6) mit der Trägerschicht verbindet.

12. Verfahren zur Herstellung eines pulver- oder granulatförmigen Klebers nach Anspruch 1, bei welchem Faserware, beispielsweise Teile eines zerkleinerten Teppichs, unter gegebenenfalls gesteuerter Wärmeentwicklung agglomeriert werden, bei der unverschmolzene faserartige Bestandteile, insbesondere aus Polyamid, durch geschmolzene thermoplastische Anteile aus Polyolefinen miteinander verbunden werden, wobei die thermoplastischen Anteile aus Polyolefinen derart aufgeschmolzen werden, daß die nicht aufgeschmolzenen Fasern (8), insbesondere Polyamid-Fasern, durch die thermoplastischen Anteile aus Polyolefinen zu Fasergruppen (11), insbesondere Polyamid-Fasergruppen, und die Fasergruppen (11) durch einzelne, lange Fasern (8), insbesondere Polyamid-Fasern, mit weiteren unverschmolzenen Fasergruppen (11') zu trockenen, rieselfähigen Körnchen eines Kleber-Granulats verbunden werden.

13. Verfahren nach Anspruch 12, dadurch gekennzeichnet, daß das Granulat mit Granulatkörnchen (7) in der Größenordnung von zwei bis sieben Millimeter zermahlen wird zu einem Pulver mit Korngrößen in der Größenordnung von weniger als ein Millimeter, wobei keine Temperaturen erreicht werden, welche die faserigen Anteile, insbesondere Polyamid-Anteile, zum Schmelzen bringen.

14. Verfahren nach einem oder mehreren der Ansprüche 12 bis 13, dadurch gekennzeichnet, daß das Klebergranulat oder Kleberpulver mit weiteren reinen thermoplastischen Kunststoffanteilen, vorzugsweise Polyethylenanteilen, in Granulat- oder Pulverform in einer zugesetzten Menge von 10 % bis 50 %, vorzugsweise 30 %, der Ausgangsmenge, vorzugsweise Polyethylenanteile, gemischt werden.

## Claims

1. An adhesive, especially a laminating adhesive based on a synthetic resin, wherein unfused fibrous constituents, especially comprising polyamide-6 or -6,6, are bonded together by melted thermoplastic fractions comprising polyolefins, characterized in that unfused fibre groups (11), especially polyamide fibre groups, bonded together by melted thermoplastic fractions comprising polyolefins are bonded by individual, long fibres (8), especially polyamide fibres, to further bonded, unfused fibre groups (11'), comprising especially polyamide, to form dry, free-flowing particles of a granular adhesive.

2. An adhesive according to claim 1, characterized in that the adhesive comprises an unfused fibre fraction of 15% to 35%.

3. An adhesive according to one or more of the preceding claims, characterized in that the granules have a particle size between two millimetres and seven millimetres.

4. An adhesive according to one or more of the preceding claims, characterized in that the adhesive in the form of a powder ground from granules comprises substantially discrete fibre groups (11), especially polyamide fibre groups, and has a particle size of less than one millimetre.

5. An adhesive according to one or more of the preceding claims, characterized in that the adhesive comprises conductive materials, for example conductive pile fibres as well as further conductive materials, for example potassium formate.

6. An adhesive according to one or more of the preceding claims, characterized in that the adhesive present as granules or a powder is mixed with an added fraction, preferably a polyethylene fraction, of pure thermoplastic synthetic material granules and/or synthetic material powder in an amount of 10% to 50%, preferably 30%, of the starting amount.

7. An adhesive according to one or more of the preceding claims, characterized in that the melted thermoplastic fractions comprising polyolefins partially surround in sheath fashion unfused fibres (8), especially polyamide fibres, of a higher melting point and bond fibres (8) in clusters to form fibre groups (11), the sheath of thermoplastic synthetic material fractions extending only over part of the length of a fibre (8).

8. A carpet (1) comprising pile threads (2) forming a pile layer, a base layer consisting of fibrous or stranded material comprising polyolefins or polyester, and a back coating (6), the pile threads (2) being optionally firmly bonded to the base layer by the back coating (6) and consisting of a comparatively high-temperature-resistant synthetic material, especially polyamide-6 or -6,6, and the back coating (6) being bonded to the base layer as a lamination (5), characterized in that the back coating (6) is effected by means of a heat activable adhesive according to one or more of the preceding claims.

9. A carpet according to claim 8, characterized in that the fibre fraction of the laminating adhesive used and of the rest of the carpet is identical and is preferably about 30%.

10. A carpet according to one or more of claims 8 to 9, characterized in that the carpet and the laminating adhesive comprise similar synthetic material fractions in the form of thermoplastic fractions comprising polyolefins and thermally stable synthetic material fibres (8), especially comprising polyamide.

11. A carpet according to one or more of claims 8 to 10, characterized in that the laminating adhesive bonds a textile secondary backing (6) to the base layer.

12. A process for producing a powder-form or granular-form adhesive according to Claim 1 which comprises agglomerating fibre material, for example parts of a comminuted carpet, by the optionally controlled development of heat, bonding the unfused fibrous constituents, especially comprising polyamide, together by means of melted thermoplastic fractions comprising polyolefins, the thermoplastic fractions comprising polyolefins being melted in such a way that the unfused fibres (8), especially polyamide fibres, are bonded by the thermoplastic fractions comprising polyolefins to form fibre groups (11), especially polyamide fibre groups, and the fibre groups (11) are bonded by individual, long fibres (8), especially polyamide fibres, to further unfused fibre groups (11') to form dry, free-flowing particles of a granular adhesive.

13. A process according to claim 12, characterized in that the granules comprising granule particles (7) having a magnitude of the order of two to seven millimetres are ground to a powder having a particle size of a magnitude of the order of less than one millimetre without temperatures being reached which would cause the fibrous fractions, especially polyamide fractions, to melt.

14. A process according to one or more of claims 12 to 13, characterized in that the granular or powder-form adhesive is mixed with further pure thermoplastic synthetic material fractions, preferably polyethylene fractions, in granule or powder form in an added amount of 10% to 50%, preferably 30%, of the starting amount, preferably polyethylene fractions.

## Revendications

1. Colle, en particulier, colle de stratification à base de résine synthétique, dans laquelle des composants fibreux non-fondus, en particulier constitués de polyamide ou 6,6, sont reliés ensemble par des parties thermoplastiques fondues constituées de polyoléfines, caractérisée en ce que les groupes de fibres (11) non fondues qui sont reliées par des parties thermoplastiques portées à la fusion et constituées de polyoléfine, en particulier des groupes de fibres de polyamide, sont reliées par des fibres (8) longues individuelles, en particulier des fibres de polyamide, à d'autres groupes de fibres (11') non fondues, reliées, constituées en particulier de polyamide, pour donner de petits grains fluides, secs, de granulats de colle.

2. Colle selon la revendication 1, caractérisée en ce que la colle contient de 15 à 35 % de fibres non fondues.

3. Colle selon l'une ou plusieurs des revendications précédentes, caractérisée en ce que le granulat a une taille de grain comprise entre deux millimètres et sept millimètres.

4. Colle selon l'une ou plusieurs des revendications précédentes, caractérisée en ce que la colle qui se présente sous une forme pulvérulente de granulat broyé, présente des groupes de fibres (11) sensiblement individualisées, en particulier des groupes de fibres de polyamide, d'une taille de grains de poudre inférieure à un millimètre.

5. Colle selon l'une ou plusieurs des revendications précédentes, caractérisée en ce que la colle contient des substances conductrices, par exemple des fibres de poil conductrices, ainsi que d'autres substances conductrices, par exemple du formiate de potassium.

6. Colle selon l'une ou plusieurs des revendications précédentes, caractérisée en ce que la colle, se présentant sous forme de granulés ou de poudre, est mélangée à une partie ajoutée, de préférence une partie de polyéthylène, de granulat et/ou de poudre de matière synthétique thermoplastique pure, en une quantité de 10 % à 50 % de préférence 30 % de la quantité de départ.

7. Colle selon l'une ou plusieurs des revendications précédentes, caractérisée en ce que les parties thermoplastiques mises en fusion entourent partiellement à la façon d'une gaine des fibres (8) non fondues constituées de polyoléfine, en particulier de fibres de polyamide ayant un point de fusion plus élevé et assurent une liaison des fibres (8) mises en amas ou pelotées pour donner des groupes de fibres (11), la gaine constituée des parties de matière synthétique thermoplastiques ne s'étendant que sur une partie de la longueur d'une fibre (8).

8. Moquette (1) présentant des fils de poil (2), constituant une couche de velours, une couche de support, constituée d'un matériau en fibres ou en petites bandes, en polyoléfine ou en polyester, et une enduction de dos (6), les fils de poil (2) étant reliés rigidement, le cas échéant par l'enduction de dos (6), à la couche de support et sont constitués par une matière synthétique relativement résistante à haute température, en particulier du polyamide 6 ou 6.6, et l'enduction de dos (6) est reliée comme une couche ou une strate (5) à la couche de support, caractérisée en ce que l'enduction de dos (6) est réalisée à l'aide d'une colle activable thermiquement, selon l'une ou plusieurs des revendications précédentes.

9. Moquette selon la revendication 8, caractérisée en ce que les proportions de fibres de l'adhésif de stratification utilisé et du reste de la moquette sont identiques et, de préférence, d'environ 30 %.

10. Moquette selon l'une ou plusieurs des revendications 8 à 9, caractérisée en ce que la moquette et l'adhésif de stratification présentent des proportions de matière synthétique analogues du même genre sous la forme de parties thermoplastiques constituées de polyoléfines et de fibres de matière synthétique (9) résistantes à la température, en particulier de polyamide.

11. Moquette selon l'une ou plusieurs des revendications 8 à 10, caractérisée en ce que la colle de stratification unit un dossier double textile (6) à la couche support.

12. Procédé de fabrication d'une colle sous forme pulvérulente ou granulée selon la revendication 1, pour lequel du matériau fibreux, par exemple des morceaux d'un tapis ou moquette déchiquetés, sont agglomérés, le cas échéant avec un dégagement de chaleur contrôlé, dans lequel les composants fibreux non-fondus, en particulier en polyamide, sont reliés ensemble par des parties thermoplastiques fondues constituées de polyoléfines, les parties thermoplastiques constituées de polyoléfines étant mises en fusion, de manière que les fibres (8) non fondues, en particulier les fibres de polyamide, soient reliées par la partie thermoplastique constituée de polyoléfine pour former des groupes de fibres (11), en particulier des groupes de fibres de polyamide, et les groupes de fibres (11) sont reliés par des fibres (8) longues individuelles, en particulier des fibres de polyamide, à d'autres groupes de fibres (11') non fondues pour donner des petits grains fluides secs d'un granulat de colle.

13. Procédé selon la revendication 12, caractérisé en ce que le granulat comportant des petits grains de granulat (7) d'une taille de l'ordre de 2 à 7 mm, est broyé pour obtenir une poudre présentant une granulométrie d'un ordre de grandeur inférieur à 1 mm, sans qu'on n'atteigne une température risquant de mettre en fusion les parties fibreuses, en particulier les parties de polyamide.

14. Procédé selon l'une ou plusieurs des revendications 12 à 13, caractérisé en ce que le granulat de colle ou la poudre de colle est mélangé à d'autres parties de matière synthétique thermoplastiques pures, de préférence des parties de polyéthylène, sous une forme de granulat ou de poudre en une quantité apportée d'environ 10 % à 50 %, de préférence 30 % de la quantité de départ de préférence, des parties de polyéthylène.
